# EUROPÄISCHE PATENTSCHRIFT

(11) **EP 1 086 853 B1**
(45) Veröffentlichungstag und Bekanntmachung des Hinweises auf die Patenterteilung: **12.04.2006**
(21) Anmeldenummer: 00119629.4
(22) Anmeldetag: 08.09.2000
(51) Int. Cl.: B60P 1/00, B60B 33/00, B60K 7/00, B60K 17/10

(54) **Schwerlasttransportsystem sowie Fahrmodul und Hydraulikeinheit dafür**
Heavy load transporting system with drive module and hydraulic unit
Système de transport de charges lourdes avec module d'entraînement et unité hydraulique

(30) Priorität: 24.09.1999 DE 19945750
(43) Veröffentlichungstag der Anmeldung: 28.03.2001
(73) Patentinhaber: Wägerle, Wolfgang, 74357 Bönnigheim (DE)
(72) Erfinder: Wägerle, Wolfgang, 74357 Bönnigheim (DE)
(74) Vertreter: Schultenkämper, Johannes

(56) Entgegenhaltungen:
- GB-A- 2 130 987
- US-A- 3 612 312
- US-A- 4 243 344
- US-A- 5 431 523

## Beschreibung

Die Erfindung betrifft ein Schwerlasttransportsystem nach dem Oberbegriff des Anspruchs 1, sowie eine Hydraulikeinheit dafür nach dem Oberbegriff des Anspruchs 10.

Aus der GB 2130987A ist ein Schwertransportsystem für Schiffe bekannt, bei dem ein einziger Hydraulikkreislauf zum Antrieb der Räder wie auch für die Lenkung verwendet wird, wobei die Räder einzeln ausgelenkt werden und zwar vorzugsweise entlang eines Radius R.

Aus der DE 197 46 666 A1 ist ein Modulfahrzeug für den Transport auf der Straße bekannt, das zusammen mit einem Zugfahrzeug (LKW mit Verbrennungsmotor) ein Gespann bildet, welches auch bei großen Schlepp- oder Fahrgeschwindigkeiten von bis zu 80 km/h betrieben werden kann. Das dortige Hydraulik-Antriebsaggregat unterstützt bei größeren Steigungen den Schleppbetrieb des Zugfahrzeugs, wird aber im Bedarfsfall insbesondere auf abschüssigen Fahrstrecken mechanisch vom radseitigen Antriebsstrang entkoppelt. Dadurch wird die bei herkömmlichen Konstruktionen hinzunehmende Geschwindigkeitsbegrenzung auf etwa 5 km/h aufgehoben. Zu Ein- und Auskoppeln des Hydraulikantriebes wird dort ein spezieller Kolben-Nockenwellen-Antrieb in Form eines sog. Radnabenmotors vorgeschlagen.

Es sind Schwerlasttransportsysteme und -vorrichtungen unterschiedlichster Arten bekannt. Es gibt sehr einfache aber antriebslose Transportvorrichtungen, wie etwa die Sackkarre oder den Hubwagen, mit dem man Transportpaletten bewegt, auf denen sich schwere Gegenstände oder Material befinden. Da ausschließlich Muskelkraft eingesetzt wird, dürfen die Lasten nicht zu groß sein. Die für höhere Lasten verwendeten, bekannten motorgetriebenen Transportsysteme und -vorrichtungen, wie etwa Gabelstapler oder Lastkraftwagen, sind aufwendig gebaut. Sie werden durch Elektromotoren oder Brennkraftmaschinen angetrieben und sind zumeist sehr groß, nicht selten so groß wie die zu transportierenden Gegenstände selbst. Aus dem Sondermaschinenbau sind noch größere Schwersttransporter bekannt, die besonders schwere Lasten transportieren können.

Aus der US 3,612312 Patentschrift ist ein Schwersttransporter bekannt zum Transportieren von Schiffsteilen oder von anderen sehr schweren Gegenständen. Der Schwersttransporter ist ein Fahrzeug mit mehrrädrigen Fahrmodulen ("multiwheeled vehicles"), die jeweils ein Elektromotor antreibt. Die zu transportierende Last wird von den Fahrmodulen getragen, die wiederum von einer zentralen fahrbaren Einheit ("command vehicle") gesteuert werden. Dieses bekannte System ist sehr aufwendig gebaut, hat die Ausmaße eines größeren Lastkraftwagens und kann nur sehr beschränkt im Innern von Gebäuden eingesetzt werden.

Demnach gibt es entweder nur aufwendig gebaute motorgetriebene Transportsysteme, die sehr groß sind und nur sehr beschränkt im Innern von Gebäuden eingesetzt werden können, oder recht kleine aber antriebslose Transportvorrichtungen, wie z.B. die Sackkarre oder den Hubwagen.

Aufgabe der Erfindung ist es, ein Schwerlasttransportsystem mit motorgetriebenen Fahrmodulen vorzuschlagen, das kleiner und weniger aufwendig gebaut ist, als die eingangs genannten Systemen und das besonders gut dazu geeignet ist, schwere Gegenstände im Innern von Gebäuden einfach und sicher transportieren zu können.

Gelöst wird die Aufgabe durch ein Schwerlasttransportsystem mit den Merkmalen des Anspruchs 1 sowie durch eine Hydraulikeinheit nach Anspruch 7.

Demnach sind die Fahrmodule mit Hydraulikmotoren ausgestattet, die über Hydraulikschläuche mit einer zentrale Hydraulikeinheit verbunden sind, welche wiederum mindestens zwei Hydraulikkreisläufe versorgt, wobei sie für jeden der Hydraulikkreisläufe den Durchfluß steuert und wobei jeder der Hydraulikmotoren mittels der Hydraulikschläuche an einen der Hydraulikkreisläufe angeschlossen ist.

Durch die Hydraulikmotoren können die Fahrmodule sehr kompakt aufgebaut sein und dennoch eine große Antriebskraft erzeugen. Die Steuerung des Durchflusses kann mittels einer sogenannten 0/1-Steuerung erfolgen, bei der Hydraulikventile die Kreisläufe für das Hydraulikmittel öffnen oder schließen. Anstelle dieser "harten" Steuerung ist auch eine sogenannte proportionale Steuerung denkbar, bei der Proportional-Ventile den Durchfluß von 0-100% begrenzen. Durch diese "weiche" Steuerung sind Drehzahl und Antriebskraft der Hydraulikmotoren sehr genau steuerbar, so daß jedes Fahrmodul sehr präzise bewegt werden und vorzugsweise sehr schwere Lasten (100 Tonnen und mehr) transportiert werden können. Außerdem können durch die zentrale Hydraulikeinheit, die verschiedene Kreisläufe versorgt und mehrere Fahrmodule separat voneinander gesteuert werden, so dass das ganze Schwerlasttransportsystem sehr einfach und präzise zu manövrieren ist. Das System kann nicht nur vor- und zurück sowie enge Kurven fahren, sondern kann sich auch auf der Stelle drehen.

Vorteilhafte Ausgestaltungen ergeben sich aus den Unteransprüchen:

Demnach ist es besonders vorteilhaft, wenn die zentrale Hydraulikeinheit mindestens eine Hydraulikpumpe enthält, die ein Hydraulikmittel zum Durchfluß durch die Hydraulikkreisläufe komprimiert, und eine damit verbundene Ventilanordnung mit Steuerung enthält, die den Durchfluß des Hydraulikmittels für jeden der Hydraulikkreisläufe entsprechend den Steuersignalen steuert, die eine mit der Steuerung verbundene Fernbedienung sendet. Durch diese speziellen Maßnahmen wird eine zuverlässige zentrale Steuerung für die verschiedene Kreisläufe aufgebaut, die von außen fernbedient werden kann. Die Bewegung der Fahrmodule kann also vor Ort an dem zu transportierenden Gegenstand jederzeit und in vollem Umfang gesteuert werden.

In diesem Zusammenhang ist es besonders vorteilhaft, wenn die Steuerung mit einer drahtgebunden Fernbedienung und/oder mit einer drahtlosen Fernbedienung verbunden ist, und wenn die Steuerung die von der drahtlosen Fernbedienung kommenden Steuersignale ignoriert, falls die drahtgebundene Fernbedienung angeschlossen ist. Die drahtlose Fernbedienung wird also in diesem Fall deaktiviert. Als drahtlose Fernbedienung werden etwa ein Funk- oder Infrarotsender bereitgestellt und es wird sichergestellt, dass im Falle von Störungen dieser drahtlosen Fernbedienung, etwa durch Funkstörungen, das System dennoch fernbedienbar bleibt über eine störungsfreie Drahtverbindung. Außerdem ermöglicht die Bevorzugung der drahtgebundenen Fernbedienung einen gesicherten Übungsbetrieb des Systems, bei dem eine ungelernte Person die Funkfernbedienung des Systems übt, während eine gelernte Person ihn überwacht und ggf. mittels der drahtgebundenen Fernbedienung jederzeit helfend eingreifen kann.

Ein weiterer besonderer Vorteil ergibt sich, wenn die mit der Steuerung versehene Ventilanordnung die Fließrichtung innerhalb eines jeden Hydraulikkreislaufes aufgrund von entsprechenden Steuersignalen ändert. Indem die Fließrichtungen in zwei Fahrmodulen unterschiedlich eingestellt werden, wird erreicht, dass das ganze System sich auf der Stelle dreht. Damit kann der zu transportierende Gegenstand von 0 bis 360 Grad gedreht werden. Ein genaues Manövrieren an engen Stellen und in Ecken ist jederzeit möglich.

Zudem ist es besonders vorteilhaft, wenn zusätzlich zu den mit den Hydraulikmotoren angetriebenen Fahrmodulen auch antriebslose Fahrmodule vorhanden sind, und wenn zumindest die angetriebenen Fahrmodule mittels mindestens einer stangenförmigen Verbindung miteinander zu einem Fahrgestell zusammen gebaut sind. Das Fahrgestell ist ein sehr wendiger Antriebssatz, der durch Erweiterung mit beliebig vielen antriebslosen Fahrmodulen kostengünstig zu einem modularen Transportsystem ausgebaut werden kann. Dieses Transportsystem kann optimal an sich aus Gewicht und Abmessungen des Transportgegenstandes ergebende Anforderungen angepaßt werden.

Außerdem ist es besonders vorteilhaft, wenn das Fahrgestell einen Drehteller aufweist, auf dem der zu transportierende Gegenstand aufliegt, so dass das Fahrgestell sich um die Hochachse frei drehbar bewegen kann. Dadurch kann der auf dem Drehteller aufliegende Transportgegenstand auch im Stillstand des Transportsystem in allen Richtungen gedreht werden. Außerdem kann auch das Fahrgestell in beliebige Richtungen gedreht werden, wenn das Transportsystem sich nicht fortbewegt. Damit ist ein unbeschränktes Manövrieren auf der Stelle möglich.

Das erfindungsgemäße Fahrmodul wird besonders vorteilhaft ausgestaltet, wenn die mindestens eine Antriebsrolle eine walzenförmige Rolle aus duroplastischem Kunststoff ist. Dadurch wird ein sehr stabiles und tragfähiges Fahrmodul geschaffen, daß durchaus Lasten von mehreren Tonnen problemlos tragen und fortbewegen kann.

In diesem Zusammenhang ist es besonders vorteilhaft, wenn zur Befestigung des zu transportierenden Gegenstands die Oberseite des Fahrmoduls eine Metallplatte mit einem vorgegebenen Bohrbild aufweist. Durch diese Maßnahmen wird eine variable und sehr stabile Befestigungsmöglichkeit geschaffen.

Die Erfindung und die sich daraus ergebenden Vorteile werden nun anhand von Ausführungsbeispielen genau beschrieben, wobei auf die folgenden Zeichnungen Bezug genommen wird:
- Fig. 1,: die eine Gesamtansicht des Schwerlasttransportsystem wiedergibt;
- Fig. 2,: die den Hydraulikschaltplan für die zentrale Hydraulikeinheit zeigt;
- Fig. 3a/b,: die das motorgetriebene Fahrmodul in einer ersten Ausführungsform zeigen; und
- Fig. 4a/b,: die zwei motorgetriebene Fahrmodule in einer zweiten Ausführungsform zeigen.

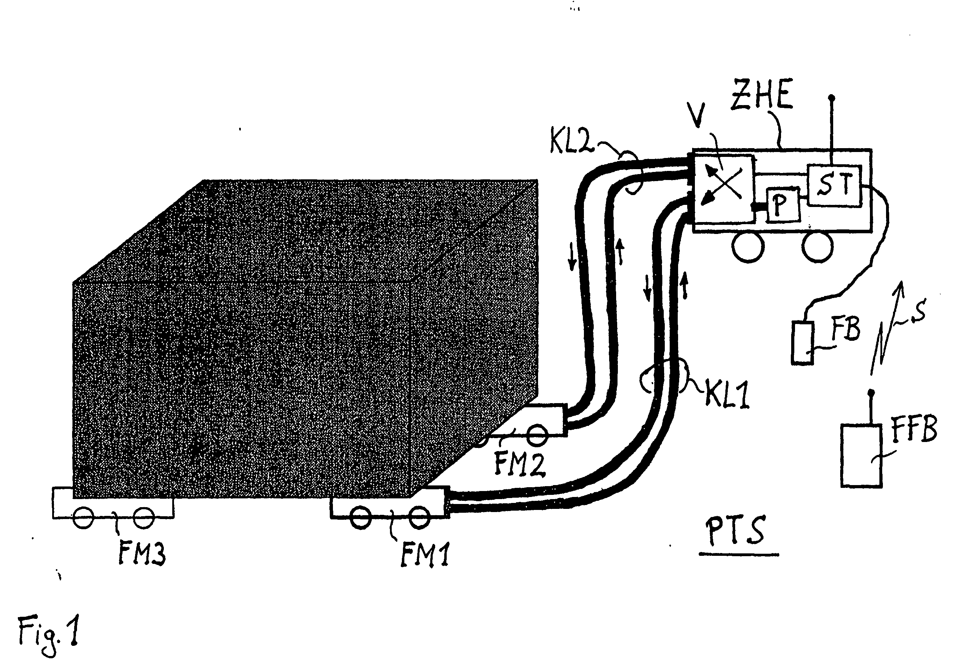

Die Figur 1 zeigt schematisch den Aufbau des erfindungsgemäßen Schwerlasttransportsystems PTS. In diesem Beispiel wird ein System mit zwei motorgetriebenen Fahrmodulen FM 1 und FM2 und mit zwei antriebslosen Fahrmodulen beschrieben, von denen nur eine FM3 dargestellt ist. Das System PTS enthält außerdem eine zentrale Hydraulikeinheit ZHE, die über Hydraulikschläuche mit dem angetriebenen Fahrmodulen FM 1 und FM 2 verbunden ist. Die zentrale Hydraulikeinheit ZHE versorgt einen ersten und zweiten Hydraulikkreislauf KL1 und KL2, an welchen das erste Fahrmodul FM1 bzw. das zweite Fahrmodul FM 2 angeschlossen ist. Die Fahrmodule FM 1 und FM2 enthalten nicht dargestellte Hydraulikmotoren, die jeweils zwei damit verbundene Antriebsrollen antreiben. Die zentrale Hydraulikeinheit ZHE kann den Durchfluß des Hydraulikmittels in den beiden Hydraulikreisläufen KL1 und KL2 getrennt voneinander steuern. Dadurch können die Fahrmodule FM1 und FM2 in gleiche oder in zueinander unterschiedliche Richtungen bewegt werden. Entsprechend wird der zu bewegende Gegenstand in eine Richtung bewegt oder auf der Stelle gedreht. Die Fahrmodule sind sehr stabil ausgeführt; die Antriebsrollen bestehen aus duroplastischem Material und sind daher äußert druckfest. Ein einzelnes Fahrmodul kann etwa bis zu 15 Tonnen Last tragen. Das in Figur 1 dargestellte System mit vier Fahrmodulen kann entsprechend 60 t Last tragen. Die Fahrmodule sind sehr kompakt gebaut und haben eine Abmessung von 40 cm Länge, 30 cm Breite und 15 cm Höhe. Es ist auch denkbar, die beschriebene Konstruktion zu vergrößern und die Anzahl der Fahrmodule zu erhöhen, um ein sehr stabiles Transportsystem für mehr als 200 Tonnen Last zu bauen.

Damit können die Fahrmodule sehr einfach unter zu transportierende Gegenstände, wie etwa große Maschinen, insbesondere Drehbänke, Bohrwerke, Druckmaschinen, Pressen Fräsmaschinen etc., angeordnet werden.

Die zentrale Hydraulikeinheit ZHE erzeugt mittels einer Hydraulikpumpe P einen Druck von 180 bar. Das komprimierte Hydraulikmittel wird über eine Ventilanordnung V in die Kreisläufe KL1 und KL2 eingespeist. Diese Ventilanordnung V wird von einer elektronischen Steuerung ST angesteuert, damit die Durchflußrichtung und die Fließgeschwindigkeit in den Kreisläufen veränderbar gesteuert werden kann. Die elektronische Steuerung enthält einen Funkempfänger, der Steuersignale S von einer drahtlosen Fernbedienung FFB empfängt. Außerdem ist die elektronische Steuerung ST mit einer drahtgebundenen Fernbedienung FB verbunden. Der Aufbau und die Arbeitsweise der Ventilanordnung und der mit ihr verbundenen Steuerung ST werden im weiteren noch näher beschrieben.

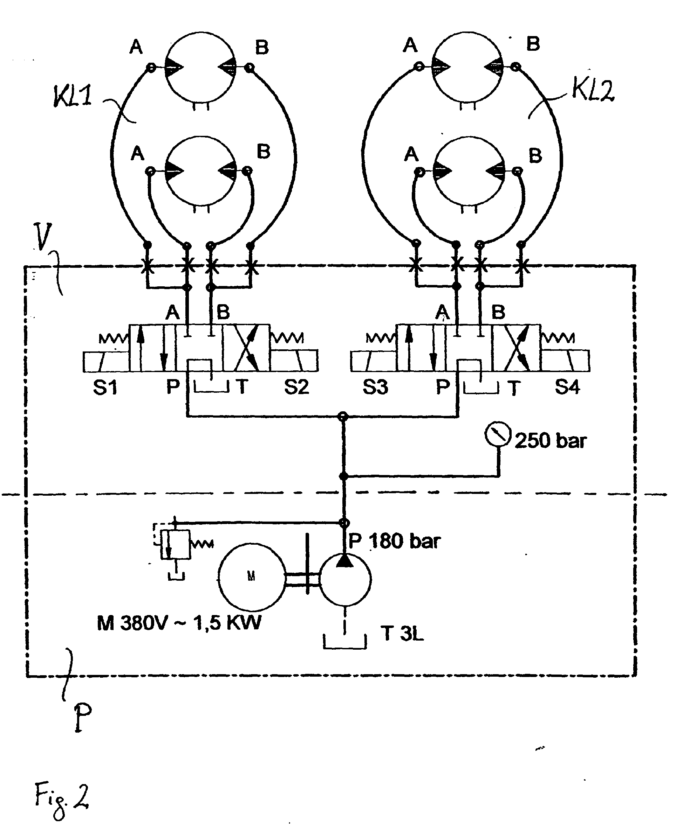

Die Figur 2 zeigt den Hydraulikschaltplan für die Ventilanordnung V sowie für die damit verbundene Hydraulikpumpe P. Die Hydraulikpumpe enthält einen Elektromotor und erzeugt durch Kompression des Druckmittels (Hydraulikmittels) einen Druck von 180 bar. Der Elektromotor wird über Drehstrom mit 380 V gespeist und hat eine Leistung von 1,5 kW. Das komprimierte Druckmittel wird in die Ventilanordnung eingespeist. Dort wird das Hydraulikmittel auf den ersten Kreislauf KL1 und auf den zweiten Kreislauf KL2 verteilt. Die Anordnung enthält elektromagnetische Ventile, die für jeden Kreislauf den Durchfluß des Hydraulikmittels steuern. Befindet sich ein Ventil in der Stellung "P", dann fließt das Hydraulikmittel in "Vorwärtsrichtung" zu den Anschlüssen A, dann in durch die Hydraulikmotoren und anschließend über die Anschlüsse B zurück zur zentralen Hydraulikeinheit ZHE. Befindet sich ein Ventil in der Stellung "T", dann wird die Durchflußrichtung umgekehrt und die Hydraulikmotoren dieses Kreislaufes bewegen sich in "Rückwärtsrichtung". Dazu werden hier elektromagnetische 0/1-Ventile über entsprechende Schaltrelais S 1 bis S4 geschaltet, damit sie die den Durchfluß freigeben oder sperren. Die Schaltrelais wiederum sind mit der in Figur 1 dargestellten elektronischen Steuerung ST verbunden. Jeder Kreislauf kann separat gesteuert werden. Anstelle der hier gezeigten Ausführung mit 0/1-Ventilen ist auch eine nicht dargestellte Ausführung mit proportionalen Ventile denkbar, bei der sowohl die Durchflußrichtung als auch die Fließgeschwindigkeit gesteuert werden können. Damit kann ein sehr leistungsstarkes Transportsystem aufgebaut werden, das sehr genau bewegt werden kann.

Das erfindungsgemäße System enthält auch einen Funkempfänger zum Empfang der drahtlosen Sendesignale S und einen Anschluß für eine drahtgebundene Fernbedienung FB. Falls die Funksignale S gestört am Empfänger eintreffen oder falls der Funksender FFB ausfällt, werden die von der drahtgebundenen Fernbedienung FFB kommenden Steuersignale bevorzugt behandelt. Zur Vereinfachung wird der Funkempfänger zwangsabgeschaltet, sobald die drahtgebundene Fernbedienung FB an die Hydraulikeinheit angeschlossen wird. Dadurch wird sicher gestellt, dass die zentrale Hydraulikeinheit ZHE immer sicher und störungsfrei ferngesteuert werden kann. An der zentralen Hydraulikeinheit ist zudem ein Notaus-Knopf angebracht, so dass jederzeit die Hydraulikpumpe und damit Fortbewegung der Fahrmodule gestoppt werden kann. Auch die Fernbedienungen können mit Notaus-Knöpfen versehen werden. Wie in Figur 1 und in Figur 2 dargestellt ist, ist in jedem Kreislauf mindestens ein Hydraulikmotor eingebunden. Jeder Hydraulikmotor hat eine Leistung von 4 kW bei einem Durchfluß von etwa 25 Litern pro Minute. Der Hydraulikmotor wirkt über ein Ritzel auf die mit Zahnrädern versehenen Antriebswalzen, die vorzugsweise aus Delrin (Nylon) bestehen und auf Rollenlagern oder Druckkugellagern gelagert sind. Bei einer Untersetzung im Verhältnis von 24 Ritzelzähnen zu 60 Zahnradzähnen bewegt sich das Fahrmodul mit einer max. Geschwindigkeit von etwa 30m/Min.. Diese Geschwindigkeit reicht vollkommen aus, um schwere Maschinen, wie z.B. Druckmaschinen, an ihren vorgesehenen Standort zu transportieren. Die Geschwindigkeit des Fahrmoduls kann über den veränderbaren Durchfluß des Hydraulikmittels durch den Hydraulikmotoren eingestellt werden, wenn proportionale Ventile eingesetzt werden. Das Fahrmodul kann dann äußerst langsam anfahren, wodurch auch sehr schwere Lasten von 200 Tonnen sehr präzise bewegt werden. Es wird zudem vermieden, dass der Transportgegenstand herunterfällt oder auf andere Weise Schaden nimmt.

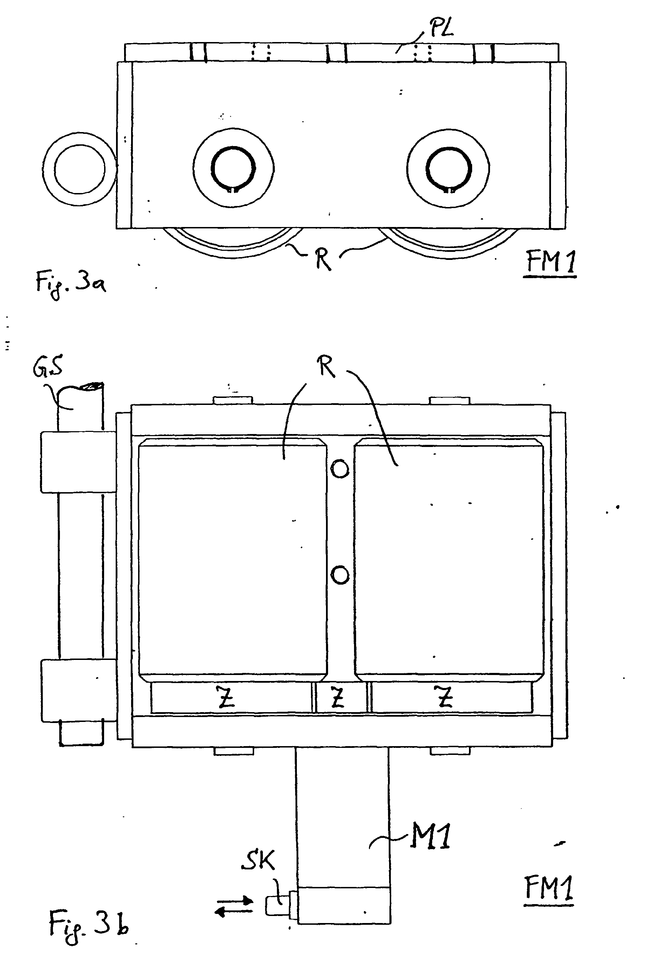

Die Figur 3 a und b zeigen nun den Aufbau einen Fahrmodules FM 1 in der Seitenansicht (Figur 3a) und in der Ansicht von unten (Figur 3b). Das Fahrmodul hat zwei walzenförmige Rollen R, die einen Durchmesser von jeweils 120 mm und eine Länge von 160 mm haben. Auf der Oberseite des Fahrmodules befindet sich eine Metallplatte PL mit Bohrbild, so dass dort das Fahrmodul sicher mit dem zu transportierenden Gegenstand verschraubt werden kann. Wie die Figur 3b zeigt, werden die Walzen über Zahnräder Z von einen Hydraulikmotor M1 angetrieben. Der Hydraulikmotor ist über Schnellkupplungen SK an Hydraulikschläuche angeschlossen, die wiederum an die zentrale Hydraulikeinheit angeschlossen sind. Durch die Verwendung von Schnellkupplungen SK ist das ganze System sehr leicht zerlegbar und wieder zusammenbaubar. Um ein Fahrmodul mit einem anderen zu verbinden, sind an einer Stirnseite eines Fahrmodules zwei ringförmige Aufnahmen für ein Verbindungsgestänge GS angebracht. Somit können zwei Fahrmodule sehr einfach zu einem Fahrgestell zusammengebaut werden.

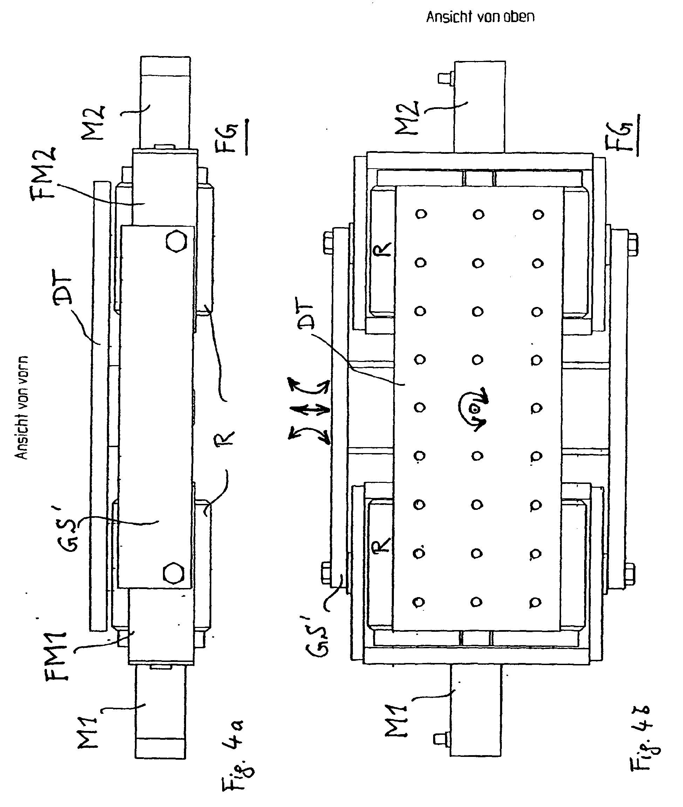

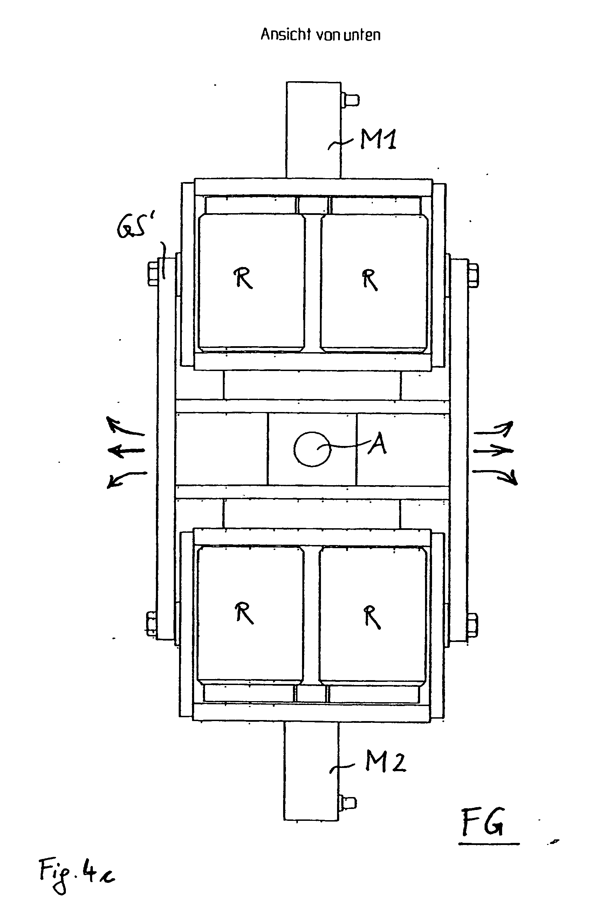

Die Figur 4a,b,c zeigen als zweite Ausführungsform ein Fahrgestell FG, das aus zwei Fahrmodulen FM1 und FM2 besteht und einen Drehteller DT aufweist. Jedes der beiden Fahrmodule FM1 und FM2 ist im wesentlichen, so wie in Figur 3 dargestellt, aufgebaut. In diesem Beispiel sind die beiden Fahrmodule jedoch nicht über ein Gestänge, sondern über zwei Metallstreben GS' starr miteinander zu einem Fahrgestell FG verbunden. Auf der Oberseite des Fahrgestells befindet sich ein Drehteller DT, der in eine Aufnahme A drehbar gelagert ist. Auch der Drehteller DT hat ein vorgegebenes Bohrbild (Bohrlochmuster), so dass dort das Fahrgestell FG mit dem Transportgegenstand sicher verschraubt werden kann. Der Drehteller DT ist in der Aufnahme A austauschbar gelagert und kann durch einen anders geformten Drehteller oder durch eine andere Aufnahmevorrichtung, etwa eine u-förmige Gabel, einfach ersetzt werden. Durch die drehbare Lagerung kann der Transportgegenstand auch beim Stillstand des Fahrgestells um die Hochachse gedreht werden. Außerdem ist es möglich, dass sich das Fahrgestell auf der Stelle dreht. Dies wird erreicht durch eine gegensinnige Flußrichtung in den beiden Hydraulikreisläufen. Sehr vorteilhaft ist es, wenn ein solches Fahrgestell zusammen mit zwei antriebslosen Fahrmodulen zu einem Transportsystem zusammengestellt werden. Dabei befinden sich die antriebslosen Fahrmodule am hinteren Ende des Transportgegenstandes und das Fahrgestell am vorderen Ende in der Mitte. Diese so gebildete Dreipunkt-Auflage für schwere Transportgegenstände hat demnach die Gestalt eines "Dreirades". Bei gleichsinniger Durchströmung der Kreisläufe wird das gesamte System nach vom oder nach hinten bewegt. Wird einer der Kreisläufe weniger als der andere durchflutet, so führt das Fahrgestell eine kurvenförmige Bewegung aus. Werde beide Kreisläufe gegensinnig durchflutet, so dreht sich das Fahrgestell auf der Stelle, wobei der Transportgegenstand unbewegt bleibt. Dadurch können alle denkbaren Fahrbewegungen in der Ebene schnell und einfach durchgeführt werden. Das Transportsystem kann beliebig bewegt werden und alle denkbaren Manöver sehr präzise ausführen.

## Patentansprüche

1. Schwerlasttransportsystem (PTS) mit motorgetriebenen Fahrmodulen (FM1, FM2), die jeweils einen Motor (M1, M2) und mindestens eine damit verbundene Antriebsrolle (R) aufweisen, *bei dem* die Motoren Hydraulikmotoren (M1, M2) sind, die über Hydraulikschläuche mit einer zentralen Hydraulikeinheit (ZHE) verbunden sind, **dadurch gekennzeichnet, dass** die Hydraulikeinheit (ZHE) mindestens zwei Hydraulikkreisläufe (KL1, KL2) versorgt, wobei die Hydraulikeinheit (ZHE) für jeden der Hydraulikkreisläufe (KL1, KL2) den Durchfluss steuert, und dass jeder der Hydraulikmotoren (M1) mittels der Hydraulikschläuche an einen der Hydraulikkreisläufe (KL1) angeschlossen ist.

2. Schwerlasttransportsystem (PTS) nach Anspruch 1, **dadurch gekennzeichnet, dass** die zentrale Hydraulikeinheit (ZHE) mindestens eine Hydraulikpumpe (P) enthält, die ein Hydraulikmittel zum Durchfluss durch die Hydraulikkreisläufe (KL1, KL2) komprimiert, und eine damit verbundene Ventilanordnung (V) mit Steuerung (ST) enthält, die den Durchfluss des Hydraulikmittels für jeden der Hydraulikkreisläufe (KL1, KL2) entsprechend den Steuersignalen (S) steuert, die eine mit der Steuerung (ST) verbundene Fernbedienung (FB, FFB) sendet.

3. Schwerlasttransportsystem (PTS) nach Anspruch 2, **dadurch gekennzeichnet, dass** die Steuerung (ST) mit einer drahtgebunden Fernbedienung (FB) und/oder mit einer drahtlosen Fernbedienung (FFB) verbunden ist, und dass die Steuerung (ST) so eingestellt ist, dass sie im Bestrieb die von der bzw. einer drahtlosen Fernbedienung (FFB) kommenden Steuersignale (S) ignoriert, falls die bzw. eine drahtgebundene Fernbedienung (FB) an die Steuerung (ST) angeschlossen ist.

4. Schwerlasttransportsystem (PTS) nach Anspruch 2 oder 3, **dadurch gekennzeichnet, dass** die mit der Steuerung (ST) versehene Ventilanordnung (V) dem Druck und die Fliessrichtung innerhalb eines jeden Hydraulikkreislaufes (KL1, KL2) aufgrund der entsprechenden Steuersignalen (S) ändert.

5. Schwerlasttransportsystem (PTS) nach Anspruch 1, **dadurch gekennzeichnet, dass** zusätzlich zu den mit den Hydraulikmotoren (M1, M2) angetriebenen Fahrmodulen (FM1, FM2) auch antriebslose Fahrmodule (FM3) vorhanden sind, und dass zumindest die angetriebenen Fahrmodule (FM1, FM2) mittels mindestens einer stangenförmigen Verbindung (GS, GS') miteinander zu einem Fahrgestell (FG) zusammengebaut sind.

6. Schwerlasttransportsystem (PTS) nach Anspruch 5, **dadurch gekennzeichnet, dass** das Fahrgestell (FG) einen Drehteller (DT) aufweist, auf dem der zu transportierende Gegenstand aufliegt, so dass das Fahrgestell (FG) sich um die Hochachse frei drehbar bewegen kann.

7. Hydraulikeinheit (ZHE) für ein Schwerlasttransportsystem (PTS) mit motorgetriebenen Fahrmodulen (FM1, FM2), die jeweils einen Motor (M1, M2) und mindestens eine damit verbundene Antriebsrolle (R) aufweisen, wobei die Motoren Hydraulikmotoren (M1, M2) sind und wobei die Hydraulikeinheit (ZHE) über Hydraulikschläuche mit den Hydraulikmotoren (M1, M2) verbunden ist, **dadurch gekennzeichnet dass** die Hydraulikeinheit (ZHE) die Hydraulikmotoren (M1, M2) zentral über mindestens zwei Hydraulikkreisläufe (KL1, KL2) versorgt, wobei jeder der Hydraulikmotoren (M1) an einen der Hydraulikkreisläufe (KL1) angeschlossen ist, und dass die Hydraulikeinheit (ZHE) für jeden der Hydraulikkreisläufe (KL1, KL2) den Durchfluss steuert.

## Claims

1. A heavy-duty transporting system (PTS) with motor-driven drive modules (FM1, FM2) each having a motor (M1, M2) and at least one drive roller (R) connected therewith, said motors being hydraulic motors (M1, M2) which are connected through hydraulic hoses with a central hydraulic unit (ZHE), **characterized in that** said central liydraulic unit (ZHE) supplies at least two hydraulic circuits (KL1, KL2), wherein said central hydraulic unit (ZHE) is controlling, the throughflow for each of said hydraulic circuits (KL1, KL2), and that each of said hydraulic motors (M1) is connected by said hydraulic hoses with one of said hydraulic circuits (KL1).

2. A heavy-duty transporting system (PTS) as defined in claim 1, charcterized in that said central hydraulic unit (ZHE) comprises at least one hydraulic pump (P) which compresses a hydraulic medium for throughflow through said hydraulic circuits (KL1, KL2), and comprises a valve arrangement (V) connected therewith and having a control (ST) which controls the throughflow of the hydraulic medium for each of the hydraulic circuits (KL1, KL2) in correspondence with control signals (S) which are transmitted by a remote control element (FB, FFB) connected with said control (ST).

3. A heavy-duty transporting system (PTS) as defined in claim 2, charcterized in that said control (ST) is connected with a wire-connected remote control element (FB) and/or with a wireless remote control element (FFB), and that said control (ST) is adjusted to ignore during operation the control signals (S) coming from said or any wireless remote control element (FFB) when said or any wire-connected remote control element (FB) is connected to said control (ST).

4. A heavy-duty transporting system (PTS) as defined in claim 2 or 3, charcterized in that said valve arrangement (V) being furnished with said control (ST) changes the pressure and the flow direction in each of said hydraulic circuits (KL1, KL2) based on corresponding control signals (S).

5. A heavy-duty transporting system (PTS) as defined in claim 1, charcterized in that in addition to said drive modules (FM1, FM2) which are driven by said hydraulic motors (M1, M2), also driveless drive modules (FM3) are provided, and that at least said driven drive modules (FM1, FM2) are assembled by at least one rod-shaped connection (GS, GS') with one another to form a drive frame (FG).

6. A heavy-duty transporting system (PTS) as defined in claim 5, **characterized in that** said drive frame (FG) has a rotary plate (DT) on which an object to be transported is supported, such that the drive frame (FG) is freely rotatable movable about a vertical axis.

7. A central hydraulic unit (ZHE) for a heavy-duty transporting system (PTS) with motor-driven drive modules (FM1, FM2) each having a motor (M1, M2) and at least one drive roller (R) connected therewith, said motors being hydraulic motors (M1, M2) and the central hydraulic unit (ZHE) being connected through hydraulic hoses with said hydraulic motors (M1, M2), **characterised in that** the central hydraulic unit (ZHE) supplies said hydraulic motors (M1, M2) centrally by at least two hydraulic circuits (KL1, KL2), wherein each of said hydraulic motors (M1) is connected with one of said hydraulic circuits (KL1), and that the central hydraulic unit (ZHE) is controlling the throughflow for each of said hydraulic circuits (KL1, KL2).

## Revendications

1. Système de transport robuste (PTS) avec modules d'entraînement (FM1, FM2), chacun ayant un moteur (M1, M2) et au moins un rouleau d'entraînement (R) connecté avec cela, ces moteurs étant des moteurs hydrauliques (M1, M2) connectés par l'intermédiaire de tuyaux hydrauliques a une unité hydraulique centrale (ZHE), **caractérisé en ce que** l'unité hydraulique centrale (ZHE) alimente deux circuits hydrauliques (KL1, KL2), l'unité hydraulique centrale (ZHE) contrôlant le débit de chacun des circuits hydrauliques (KL1, KL2), et que chacun des moteurs hydrauliques (M1) est connecté par l'intermédiaire de tuyaux hydrauliques à un des circuits hydrauliques (KL1).

2. Système de transport robuste (PTS) selon la revendication 1, **caractérisé en ce que** l'unité hydraulique centrale (ZHE) est pourvue d'au moins une pompe hydraulique (P), qui comprime un agent hydraulique à travers les circuits hydrauliques (KL1, KL2), ainsi qu'un système de soupape de distribution (V) avec système de commande (ST), qui contrôle le débit de l'agent hydraulique pour chacun des circuits hydrauliques (KL1, KL2) conformément aux signaux de commande (S) qui sont transmis par la télécommande (FB, FFB) au système de commande (ST).

3. Système de transport robuste (PTS) selon la revendication 2, **caractérisé en ce que** le système de commande (ST) est connecté à une télécommande avec fils (FB) et/ou une télécommande sans fils (FFB), et que le système de commande (ST) est réglé tel que, en état de fonctionnement, les signaux de commande (S) transmis par une télécommande sans fils (FFB) sont ignorés si une télécommande avec fils est connectée au système de commande (ST).

4. Système de transport robuste (PTS) selon la revendication 2 ou 3, **caractérisé en ce que** le système de soupape de distribution (V) connectée avec le système de commande (ST) change la pression et la direction du flux dans chacun des circuits hydrauliques (KL1, KL2) à l'aide des signaux de commande (S) correspondants.

5. Système de transport robuste (PTS) selon la revendication 1, **caractérise en ce qu'**en plus des modules d'entraînement (FM1, FM2) conduit par des moteurs hydrauliques (M1, M2), des modules d'entraînement (FM3) sans mécanisme de commande sont présents, et qu'au moins les modules d'entraînement (FM1, FM2) sont assemblés ensemble au châssis (FG) à l'aide d'au moins une connexion en forme de barre (GS, GS').

6. Système de transport robuste (PTS) selon la revendication 5, **caractérisé en ce que** le châssis (FG) comprend un plateau tournant (DT), sur lequel l'objet à transporter est posé, tel que le châssis (FG) peut tourner librement autour de l'axe vertical.

7. Unité hydraulique centrale (ZHE) pour un système de transport robuste (PTS) avce des modules d'entraînement (FM1, FM2), chacun ayant un moteur (M1, M2) et au moins un rouleau d'entraînement (R) connecté avec cela, ces moteurs étant des moteurs hydrauliques (M1, M2) et l'unité hydraulique centrale (ZHE) étant connectée par l'intermédiaire de tuyaux hydrauliques aux moteurs hydrauliques (M1, M2), **caractérisé en ce que** l'unité hydraulique centrale (ZHE) approvisionne les moteurs hydrauliques (M1, M2) à l'aide d'au moins deux circuits hydrauliques (KL1, KL2), chacun des moteurs hydrauliques (M1) étant connecté à un des circuits hydrauliques (KL1), et que l'unité hydraulique centrale (ZHF) contrôle le débit de chacun des circuits hydrauliques (KL1, KL2).
